# EUROPEAN PATENT APPLICATION

(11) **EP 4 379 368 A1**
(43) Date of publication of application: **05.06.2024**
(21) Application number: 22910465.8
(22) Date of filing: 02.09.2022
(51) Int. Cl.: G01N 27/62, H01J 49/04, H01J 49/16

(54) **SAMPLE SUPPORT UNIT, AND SAMPLE IONIZATION METHOD**

(30) Priority: 22.12.2021 JP 2021208138
(71) Applicant: Hamamatsu Photonics K.K., Hamamatsu-shi, Shizuoka 435-8558 (JP)
(72) Inventor: IKEDA Takamasa, Hamamatsu-shi, Shizuoka 435-8558 (JP); KOTANI Masahiro, Hamamatsu-shi, Shizuoka 435-8558 (JP); OHMURA Takayuki, Hamamatsu-shi, Shizuoka 435-8558 (JP)
(74) Representative: Grünecker Patent- und Rechtsanwälte PartG mbB
(86) International application number: PCT/JP2022/033189
(87) International publication number: WO 2023/119738

(57) **Abstract**

A sample support unit includes a substrate having a first surface and a second surface, and having a porous structure formed therein and opened to at least the first surface, and a frame removably attached to the substrate and retaining the substrate such that at least a part of the first surface is exposed. The frame has a fixing portion positioned outside the substrate when viewed in a direction perpendicular to the first surface, in the state of being attached to the substrate.

## Description

### Technical Field

One aspect of the present disclosure relates to a sample support unit and a sample ionization method.

### Background Art

In Patent Literature 1, a sample support used for the ionization of a sample such as a biological sample in sample mass analysis is described. The sample support described in Patent Literature 1 includes a substrate having a porous structure formed to communicate a first surface and a second surface facing each other. In such a sample support, by disposing the sample support on the sample such that the second surface is brought into contact with the sample, the components of the sample are moved toward the first surface side from the second surface side of the substrate via the porous structure, and the components of the sample are supplied to the first surface side. After that, in a state where a voltage is applied to the first surface, the first surface is irradiated with laser light to ionize the components of the sample.

### Citation List

### Patent Literature

Patent Literature 1: International Publication WO 2019/155741

### Summary of Invention

### Technical Problem

In the mass analysis (the ionization of the sample) using the sample support as described above, for example, the edge portion of the substrate is interposed between clamping portions of a holder to fix the sample support. However, the pressing force of the clamping portions of the holder, for example, may be set to be strong in order to suppress the misregistration of the sample support during measurement. Accordingly, there is a possibility that the substrate is bent by the pressing force from the clamping portions. In a case where the substrate is bent, there is a concern that a deviation occurs in a measurement result, or the substrate is damaged.

An object of one aspect of the present disclosure is to provide a sample support unit and a sample ionization method capable of suppressing the bending of a substrate during fixation.

### Solution to Problem

A sample support unit according to one aspect of the present disclosure is a sample support unit used for ionization of a sample, the unit including: a substrate including a first surface, and a second surface on a side opposite to the first surface, and including a porous structure formed therein and opened to at least the first surface; and a frame removably attached to the substrate and retaining the substrate such that at least a part of the first surface is exposed, in which the frame includes a fixing portion positioned outside the substrate when viewed in a direction perpendicular to the first surface, in a state of being attached to the substrate.

Such a sample support unit includes the frame that is removably attached to the substrate, and retains the substrate such that at least a part of the first surface is exposed, and the frame includes the fixing portion positioned outside the substrate when viewed in the direction perpendicular to the first surface, in the state of being attached to the substrate. Accordingly, it is possible to fix the sample support unit by interposing the fixing portion between clamping portions of a holder. In this case, since it is possible for the frame to receive a pressing force from the clamping portions, it is possible to suppress the bending of the substrate due to the pressing force from the clamping portions, without depending on the strength of the substrate. As described above, according to such a sample support unit, it is possible to suppress the bending of the substrate during fixation.

The fixing portion may include a surface positioned on the same plane as that of the first surface. In this case, when fixing the sample support unit by interposing the fixing portion between the clamping portions of the holder, it is possible to position a measurement surface of the holder and the first surface of the substrate on the same plane, and accurately perform measurement.

The frame may include a first member disposed on a side of the first surface, and a second member disposed on a side of the second surface. In this case, it is possible to reliably retain the substrate with the first member and the second member.

The fixing portion may be formed by an overlapping portion of the first member and the second member. In this case, it is possible to increase the strength of the fixing portion, and further suppress the bending of the substrate during fixation.

The first member may be formed in a frame shape. In this case, it is possible to reliably retain the substrate.

The second member may be formed in a plate shape such that the frame covers an entirety of the second surface in a state of being attached to the substrate. In this case, it is possible to reliably retain the substrate.

The second member may be formed in a frame shape. In this case, it is possible to visually check the state of the substrate from the side of the second surface.

The first member and the second member may be formed such that the substrate is interposed between the first member and the second member in a state in which the frame is attached to the substrate. In this case, it is possible to reliably retain the substrate.

The frame may include a first member disposed on a side of the first surface side, and the first member may be provided with a claw portion engaged with the second surface. In this case, it is possible to retain the substrate by engaging the claw portion with the second surface.

The frame may be formed with a calibration region used for mass calibration and the calibration region may be visually identifiable from a region adjacent to the calibration region, and a surface of the calibration region may be positioned on the same plane as that of the first surface. In this case, for example, it is possible to widely ensure a region for measurement on the substrate, compared to a case where the calibration region is formed on the substrate. In addition, it is possible to accurately perform the mass calibration.

The porous structure may be formed of a sintered body of glass beads, porous glass, a fiber porous body, anodically oxidized silicon, an anodically oxidized valve metal, porous ceramic, or a porous metal. In this case, it is possible to preferably configure the porous structure.

A sample ionization method according to one aspect of the present disclosure is a sample ionization method using the sample support unit described above, the method including: a supplying step of supplying components of the sample to the first surface; a fixing step of fixing the sample support unit by interposing the fixing portion of the frame between clamping portions of a holder; and an ionizing step of ionizing the components of the sample on the first surface after the supplying step and the fixing step.

In such a sample ionization method, in the fixing step, the sample support unit is fixed by interposing the fixing portion of the frame between the clamping portions of the holder. Accordingly, since it is possible for the frame to receive a pressing force from the clamping portions, it is possible to suppress the bending of the substrate due to the pressing force from the clamping portions, without depending on the strength of the substrate. As described above, according to such a sample ionization method, it is possible to suppress the bending of the substrate during fixation.

In the fixing step, the sample support unit may be fixed such that a surface of the holder and the first surface are positioned on the same plane. In this case, it is possible to position the surface (the measurement surface) of the holder and the first surface on the same plane, and accurately perform the measurement.

### Advantageous Effects of Invention

According to one aspect of the present disclosure, it is possible to provide the sample support unit and the sample ionization method capable of suppressing the bending of the substrate during fixation.

### Brief Description of Drawings

FIG. 1 is a sectional view of a sample support unit of an embodiment.
FIG. 2 is a plan view of the sample support unit.
FIG. 3 is a bottom view of the sample support unit.
FIG. 4 is a sectional view illustrating a state where the sample support unit is fixed with a holder.
FIG. 5 is a sectional view illustrating the sample support unit before being fixed with the holder.
FIGS. 6(a) and 6(b) are diagrams for describing a sample ionization method.
FIGS. 7(a) and 7(b) are diagrams for describing the sample ionization method.
FIG. 8 is a sectional view illustrating a state where a substrate is bent in a comparative example.
FIG. 9 is a sectional view illustrating a fixed state in another comparative example.
FIG. 10 is a plan view of a sample support unit of a first modification example.
FIG. 11(a) is a bottom view of a sample support unit of a second modification example, and FIG. 11(b) is a bottom view of a sample support unit of a third modification example.

### Description of Embodiments

Hereinafter, an embodiment of the present disclosure will be described in detail with reference to the drawings. In the following description, the same reference numerals will be applied to the same or corresponding constituents, and the repeated description will be omitted.

### [Sample Support Unit]

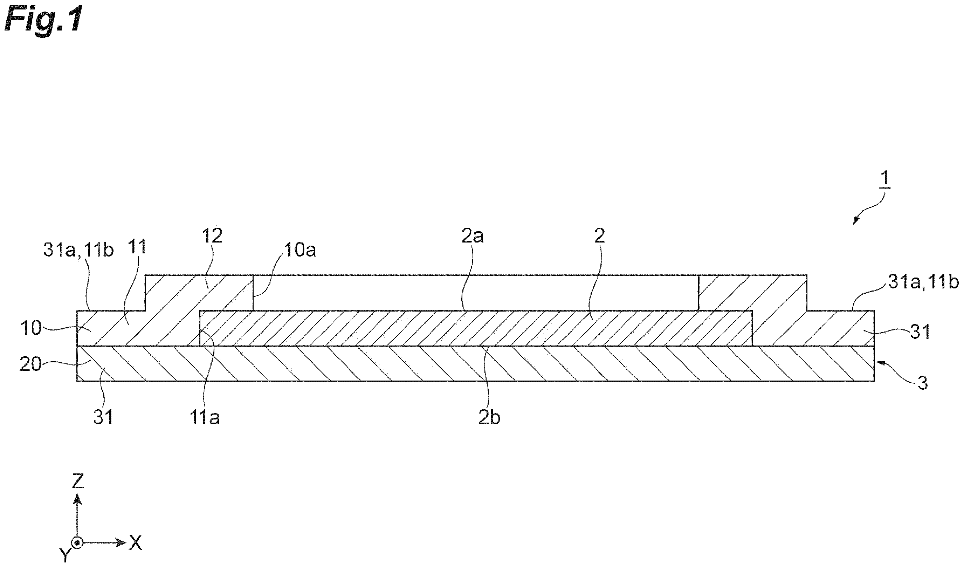

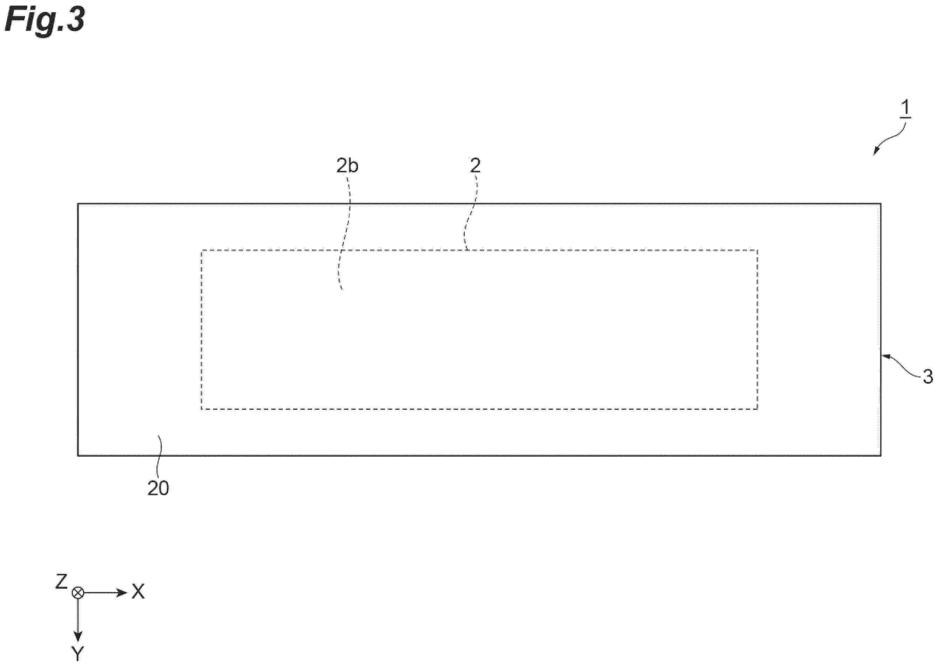

A sample support unit 1 illustrated in FIG. 1 to FIG. 5, for example, is used to ionize the components of a sample, which is a measurement target, in mass analysis. The sample, for example, is a biological sample or the like. The sample support unit 1 includes a substrate 2 and a frame 3.

The substrate 2, for example, is formed of an insulating material in a rectangular plate shape, and has a first surface 2a, and a second surface 2b on a side opposite to the first surface 2a. The first surface 2a and the second surface 2b are the main surface of the substrate 2, and for example, a flat surface perpendicular to a thickness direction of the substrate 2. The length of one side of the substrate 2 when viewed in the thickness direction of the substrate 2, for example, is approximately several cm, and the thickness of the substrate 2, for example, is approximately 1 µm to 1000 µm. Hereinafter, the thickness direction of the substrate 2 (a direction perpendicular to the first surface 2a) will be described as a Z direction, a direction perpendicular to the Z direction will be described as an X direction, and a direction perpendicular to the Z direction and the X direction will be described as a Y direction. The X direction is a direction parallel to the long side of the substrate 2.

In the substrate 2, a porous structure communicating the first surface 2a and the second surface 2b with each other is formed. In this example, the porous structure has a structure in which voids (air gaps) (pores) extend in an irregular direction and are irregularly distributed in three dimensions (an irregular porous structure). The voids in the porous structure form through holes opened to the first surface 2a and the second surface 2b. The irregular porous structure, for example, is a sponge-shaped structure. In this example, the porous structure is formed over the entire first surface 2a, but the porous structure may be formed in a part of the first surface 2a.

In this example, the substrate 2 is formed of a sintered body of glass beads. The sintered body of the glass beads, for example, has a structure in which a plurality of glass beads are integrated by sintering. The shape of each of the glass beads, for example, is a spherical shape. The shapes and the sizes of the glass beads contained in the substrate 2 may be even, or may be uneven. The porous structure described above is formed of the plurality of glass beads and a plurality of voids formed between the glass beads. The voids between the glass beads are irregularly communicated with each other. The average particle size (diameter) of the glass beads, for example, is approximately 50 µm. In a case where the substrate 2 is formed of the sintered body of the glass beads, the porosity of the porous structure, for example, is 40% to 50%.

The first surface 2a of the substrate 2 has electrical conductivity. In this example, a conductive layer is formed on the first surface 2a. The conductive layer covers the entire first surface 2a except for the opening portion of the porous structure. The conductive layer, for example, is formed of a metal material such as Pt.

The frame 3 is a member that is removably attached to the substrate 2, and retains the substrate 2 such that a part of the first surface 2a is exposed. The frame 3 is a member different from the substrate 2, which is independent from the substrate 2. In this example, the frame 3 is formed of a metal material having electrical conductivity, and has high rigidity. Examples of the material of the frame 3 include stainless steel (SUS), aluminum, a ferrous alloy, and the like.

The frame 3 includes a first member 10 disposed on the first surface 2a side, and a second member 20 disposed on the second surface 2b side. In this example, the first member 10 is formed in a rectangular frame shape, and defines a rectangular opening 10a. The long side of the opening 10a extends along the long side of the substrate 2 (along the X direction). The opening 10a is formed in a rectangular shape slightly smaller than the substrate 2 when viewed in the Z direction. In a state where the frame 3 is attached to the substrate 2 (FIG. 1), a part (the center portion) of the first surface 2a is exposed from the opening 10a.

The first member 10 includes a main body portion 11 formed in a rectangular frame shape, and a holding portion 12 provided on one side of the main body portion 11 in the Z direction. The entire main body portion 11 is positioned outside the substrate 2 when viewed in the Z direction. The main body portion 11 defines a rectangular opening 11a. The long side of the opening 11a extends along the long side of the substrate 2 (along the X direction). The opening 11a is formed in a shape corresponding to the substrate 2 (a rectangular shape) when viewed in the Z direction, and the substrate 2 is tightly disposed in the opening 11a.

The holding portion 12 is formed on a surface 11b of the main body portion 11, and has a rectangular frame shape in which the length in the X direction is shorter than that of the main body portion 11. The holding portion 12 protrudes toward the center side of the frame 3 from the main body portion 11, and a step is formed between the holding portion 12 and the main body portion 11. The opening 10a described above is defined by the holding portion 12. The thickness of the holding portion 12, for example, is approximately 1 mm.

In this example, the second member 20 is formed in a rectangular plate shape corresponding to the first member 10. The second member 20 covers the entire second surface 2b, in a state where the frame 3 is attached to the substrate 2 (FIG. 1).

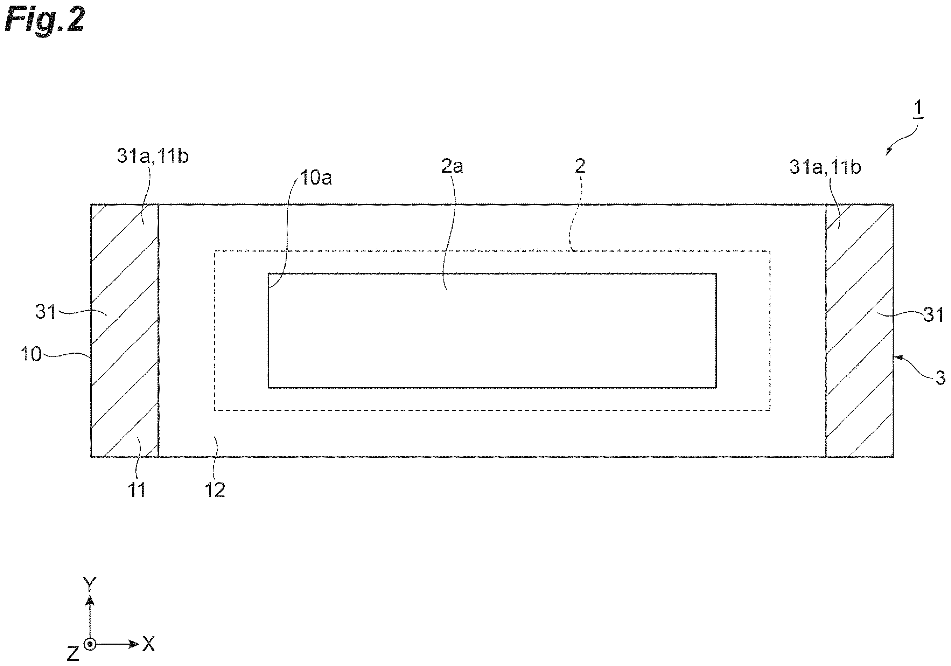

The frame 3 includes a fixing portion 31 formed by an overlapping portion of the first member 10 and the second member 20. The entire fixing portion 31 is positioned outside the substrate 2 (outside the outer edge of the substrate 2) when viewed in the Z direction. In FIG. 2, for ease of understanding, the fixing portion 31 is hatched. In this example, the fixing portion 31 is provided in each of one end portion and the other end portion of the frame 3 in the X direction, and each of the fixing portions 31 is formed in a rectangular shape having a long side parallel to the Y direction. Each of the fixing portions 31 has a surface 31a positioned on the same plane as that of the first surface 2a. In this example, the surface 31a is formed by the surface 11b of the main body portion 11 of the first member 10. That is, the surface 11b of the main body portion 11 is positioned on the same plane as that of the first surface 2a. The thickness of the fixing portion 31, for example, is approximately 1.5 mm.

As illustrated in FIG. 1, the frame 3 is attached to the substrate 2 to retain the substrate 2. For example, by disposing the substrate 2 between the first member 10 and the second member 20, the separation of the second member 20 from the frame 3 is prevented by the holding portion 12, and the substrate 2 is retained in the frame 3. In this example, in a state where the frame 3 is attached to the substrate 2, the substrate 2 is interposed and fixed between the holding portion 12 and the second member 20. As described above, in such a state, a part (the center portion) of the first surface 2a is exposed from the opening 10a. In detachment, for example, it is possible to detach the frame 3 from the substrate 2 by separating the first member 10 from the second member 20, and then, taking out the substrate 2.

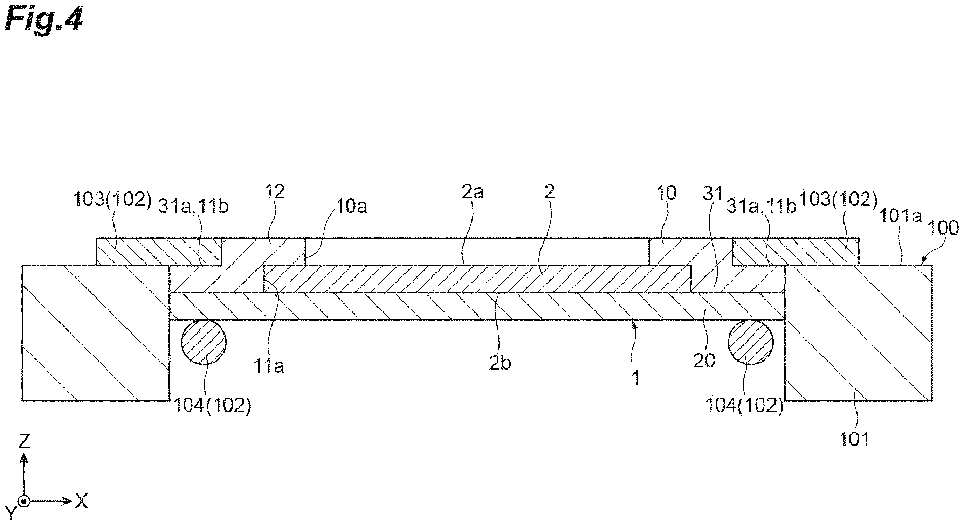

As illustrated in FIG. 4, the sample support unit 1 is fixed by a holder 100. The holder 100 includes a holder main body 101, and a plurality of (in this example, four) clamping portions 102. The holder main body 101, for example, is formed in a rectangular frame shape. Each of the clamping portions 102, for example, is configured by including a contact member 103 and a biasing member 104. The contact member 103 is fixed to a surface 101a of the holder main body 101. The contact member 103 is disposed to protrude toward the center side of the holder main body 101 from the holder main body 101.

The biasing member 104 is disposed to face the contact member 103 in the Z direction. The biasing member 104, for example, is configured by including a spring, and capable of biasing the sample support unit 1 disposed between the biasing member 104 and the contact member 103 toward the contact member 103. As an example, two clamping portions 102 among four clamping portions 102 are disposed on one side in the X direction and arranged in the Y direction, and the rest two clamping portions 102 are disposed on the other side in the X direction and arranged in the Y direction.

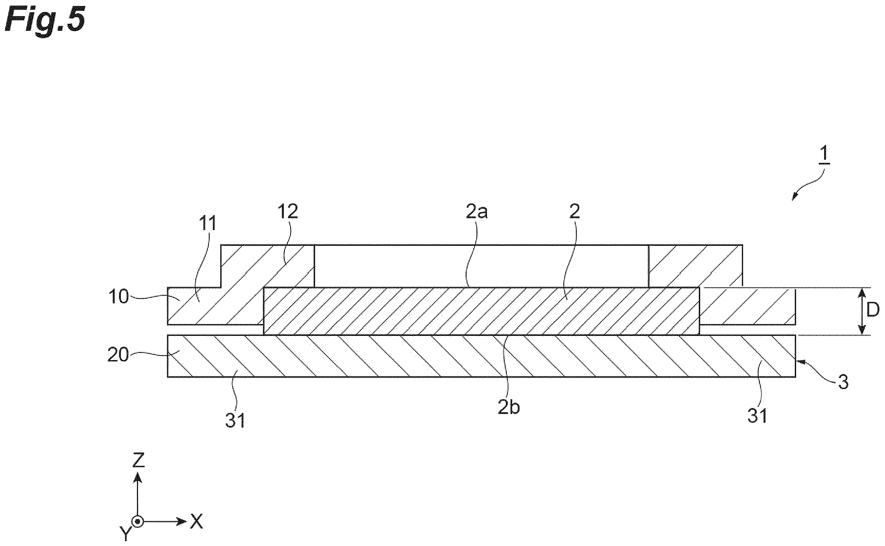

In FIG. 5, the sample support unit 1 before being fixed by the holder 100 is illustrated. As illustrated in FIG. 5, in this example, in a state before fixation, the first member 10 and the second member 20 are not in contact with each other. That is, in this example, a gap D between the holding portion 12 of the first member 10 and the second member 20 is larger than the thickness of the substrate 2. For example, the gap D is approximately 0.5 mm larger than the thickness of the substrate 2.

In FIG. 4, a state where the sample support unit 1 is fixed by the holder 100 is illustrated. By interposing the fixing portion 31 of the frame 3 between the clamping portions 102 from the state illustrated in FIG. 5, the sample support unit 1 is fixed. In such a fixed state, the first member 10 and the second member 20 are brought into contact with each other by the pressing force of the clamping portions 102, and the substrate 2 is interposed and fixed between the holding portion 12 of the first member 10 and the second member 20. That is, the first member 10 and the second member 20 are formed such that the substrate 2 is interposed between the first member 10 and the second member 20 in the fixed state. In the fixed state, the fixing portion 31 of the frame 3 is interposed between the clamping portions 102, but the substrate 2 is not interposed between the clamping portions 102.

More specifically, in the fixed state, the contact member 103 of the clamping portion 102 is in contact with the surface 31a of the fixing portion 31, and the biasing member 104 is in contact with the second member 20. The contact member 103 is provided on the surface 101a of the holder main body 101 to extend in a direction perpendicular to the Z direction. In addition, as described above, the surface 31a of the fixing portion 31 is positioned on the same plane as that of the first surface 2a of the substrate 2. Accordingly, the surface 101a of the holder main body 101 and the first surface 2a of the substrate 2 are positioned on the same plane. The surface 101a of the holder main body 101 functions as a measurement surface in mass analysis measurement. Accordingly, by positioning the surface 101a and the first surface 2a (the effective surface of the substrate 2) on the same plane, it is possible to accurately perform the measurement.

### [Method for Using Sample Support Unit]

An example of a mass analysis method using the sample support unit 1 will be described. Such a mass analysis method includes a step of ionizing a sample by using the sample support unit 1 (an ionization method), and a step of detecting the ions. First, an example of the sample ionization method using the sample support unit 1 will be described.

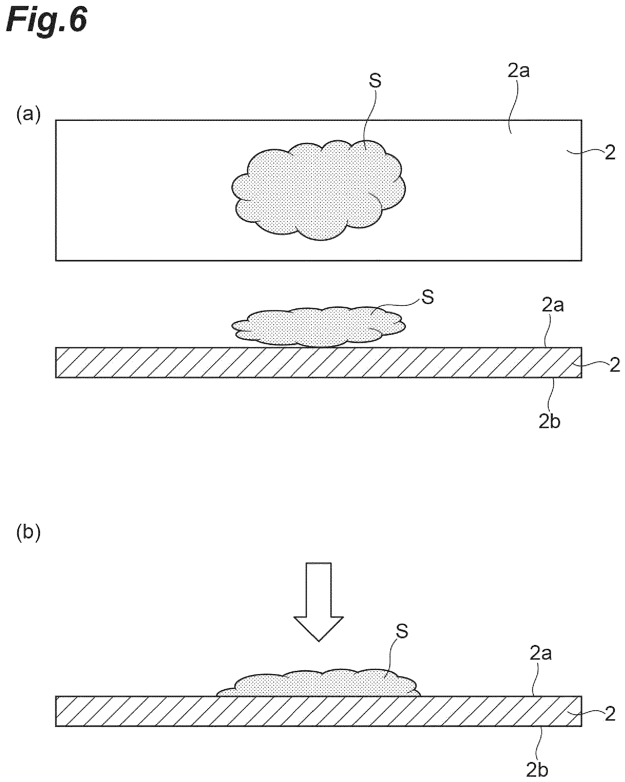

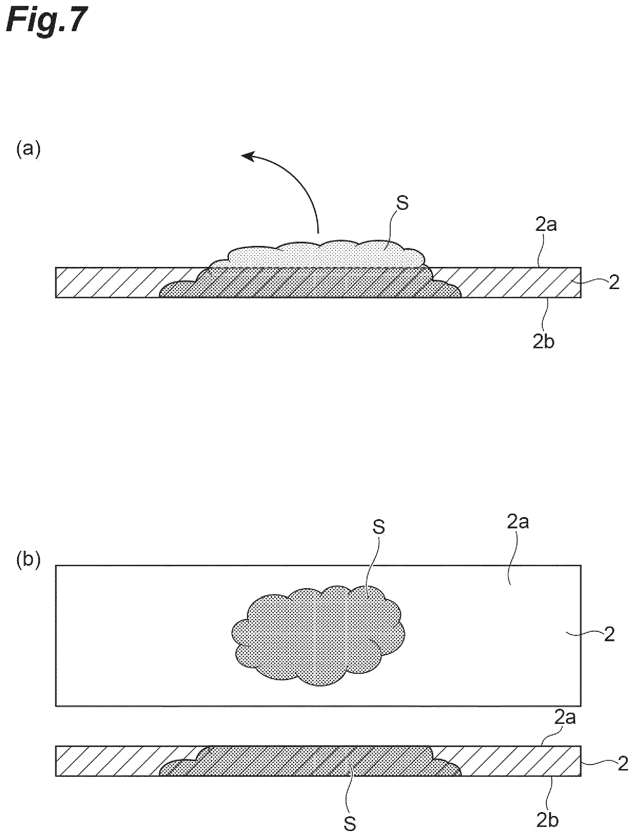

In the sample ionization method of this example, first, the components of a sample S are supplied to the first surface 2a of the substrate 2 (a supplying step). In the supplying step, the sample S is placed on the first surface 2a of the substrate 2 (FIG. 6(a)). Subsequently, the sample S is pressed toward the substrate 2 side, and the sample S is closely attached to the first surface 2a of the substrate 2 (FIG. 6(b)). Accordingly, the components of the sample S are infiltrated and absorbed into the substrate 2 (FIG. 7(a)). Subsequently, the sample S is removed (FIG. 7(a)). According to the steps described above, as illustrated in FIG. 7(b), the substrate 2 retaining the components of the sample S is obtained, and in a state where positional information is stored, the components of the sample S are supplied to the first surface 2a of the substrate 2. Note that, in FIG. 6(a), the plan view of the substrate 2 is illustrated on the upper side, and the sectional view of the substrate 2 is illustrated on the lower side. The same applies to FIG. 7(b). In FIG. 6(b) and FIG. 7(a), the sectional view of the substrate 2 is illustrated.

Subsequent to the supplying step, the frame 3 is attached to the substrate 2 (an attaching step). Subsequently, by interposing the fixing portion 31 of the frame 3 between the clamping portions 102 of the holder 100, the sample support unit 1 is fixed (a fixing step). In the fixing step, the sample support unit 1 is fixed such that the surface 101a of the holder main body 101 and the first surface 2a of the substrate 2 are positioned on the same plane by bringing the contact member 103 of the clamping portion 102 into contact with the surface 31a of the fixing portion 31.

After the fixing step, the components of the sample S on the first surface 2a are ionized (an ionizing step). For example, by scanning (irradiating) the first surface 2a with laser light in a state where a voltage is applied to the conductive layer on the first surface 2a, the components of the sample S on the first surface 2a are ionized. Such an ionization method is a laser desorption/ionization method using laser light (an energy line).

The sample ions discharged from the substrate 2, for example, are detected by an ion detection unit of a mass analysis device (an ion detecting step of the mass analysis method). For example, a ground electrode is provided between the substrate 2 and the ion detection unit, and the sample ions are moved toward the ground electrode while being accelerated by a potential difference between the conductive layer and the ground electrode. Then, the sample ions are detected by the ion detection unit, and the mass analysis measurement for the sample S is implemented. The ion detection unit detects the sample ions, in association with the scanning position of the laser light. The mass analysis device, for example, is a device performing mass analysis for the sample S by using time-of-flight mass spectrometry (TOF-MS).

### [Function and Effect]

The sample support unit 1 includes the frame 3 that is removably attached to the substrate 2, and retains the substrate 2 such that a part of the first surface 2a is exposed, and the frame 3 includes the fixing portion 31 positioned outside the substrate 2 when viewed in the Z direction (the direction perpendicular to the first surface 2a), in the state of being attached to the substrate 2. Accordingly, by interposing the fixing portion 31 between the clamping portions 102 of the holder 100, it is possible to fix the sample support unit 1. In this case, since it is possible for the frame 3 to receive the pressing force from the clamping portions 102, it is possible to suppress the bending of the substrate 2 due to the pressing force from the clamping portions 102, without depending on the strength of the substrate 2. As described above, according to such a sample support unit 1, it is possible to suppress the bending of the substrate 2 during fixation. In addition, in the sample support unit 1, for example, even in a case where the shape of the holder 100 is changed, it is sufficient that the shape of the frame 3 is changed in accordance with the change, and it is not necessary to change the design of the substrate 2. In addition, since the frame 3 is separated from the substrate 2, it is sufficient to replace only the substrate 2, and it is possible to reduce the replacement frequency of the frame 3.

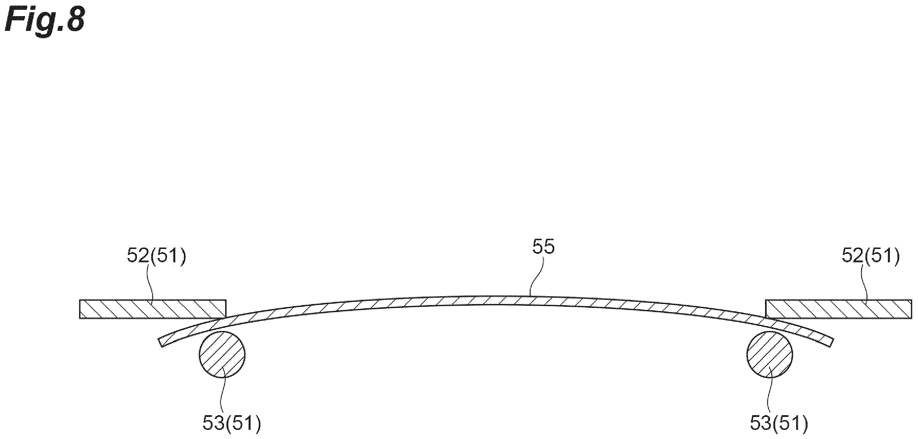

Such a respect will be further described with reference to FIG. 8. As illustrated in FIG. 8, in a case where a substrate 55 is interposed and fixed between clamping portions 51 of a holder consisting of a contact member 52 and a biasing member 53, there is a possibility that the substrate 55 is bent by the pressing force from the biasing member 53. In contrast, in the sample support unit 1 of the embodiment, since the substrate 2 is fixed by interposing the fixing portion 31 of the frame 3 between the clamping portions 102, without interposing the substrate 2, it is possible to suppress the bending of the substrate 2 during fixation.

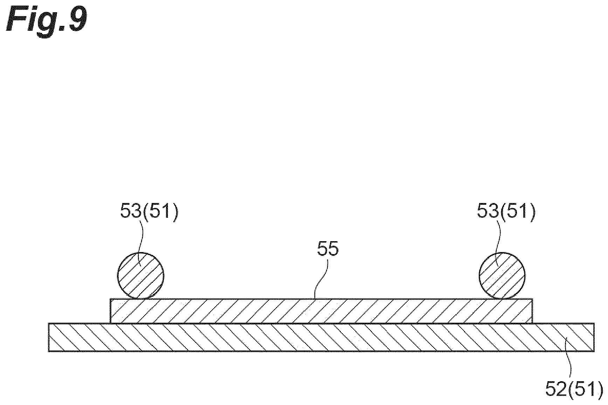

On the other hand, as illustrated in FIG. 9, even in a case where the substrate 55 is pressed and fixed to the contact member 52 by the pressing force from the biasing member 53, for example, there is a possibility that the substrate 55 is damaged by the pressing force from the biasing member 53 when the biasing member 53 is in contact with the porous structure. In contrast, in the sample support unit 1 of the embodiment, since the substrate 2 is fixed by interposing the fixing portion 31 of the frame 3 between the clamping portions 102, without interposing the substrate 2, it is possible to suppress the damage of the substrate 2 during fixation.

The fixing portion 31 has the surface 31a positioned on the same plane as that of the first surface 2a. Accordingly, when fixing the sample support unit 1 by interposing the fixing portion 31 between the clamping portions 102 of the holder 100, it is possible to position the surface 101a (the measurement surface) of the holder main body 101 of the holder 100 and the first surface 2a of the substrate 2 on the same plane, and accurately perform the measurement. The mass analysis device may be designed or optimized such that the surface 101a is the measurement surface (the irradiation point of laser light, the point of origin of time-of-flight analysis), which is because it is considered that a decrease in an ionization efficiency or a shift in flight time occurs due to discordance in the focal range of the laser irradiation in a case where the surface 101a and the first surface 2a are not positioned on the same plane.

The frame 3 has the first member 10 disposed on the first surface 2a side, and the second member 20 disposed on the second surface 2b side. Accordingly, it is possible to reliably retain the substrate 2 with the first member 10 and the second member 20.

The fixing portion 31 is composed of the overlapping portion of the first member 10 and the second member 20. Accordingly, it is possible to increase the strength of the fixing portion 31, and further suppress the bending of the substrate 2 during fixation.

The first member 10 is formed in a frame shape. In addition, the second member 20 is formed in a plate shape to cover the entire second surface 2b in a state where the frame 3 is attached to the substrate 2. Accordingly, it is possible to reliably retain the substrate 2.

The first member 10 and the second member 20 are formed such that the substrate 2 is interposed between the first member 10 and the second member 20 in a state where the frame 3 is attached to the substrate 2. Accordingly, it is possible to reliably retain the substrate 2.

The frame 3 is formed of the metal material having electrical conductivity. Accordingly, it is possible to facilitate the application of a voltage to the first surface 2a when ionizing the sample. In addition, it is possible to increase the strength of the frame 3, and further suppress the bending of the substrate 2 during fixation.

The porous structure is formed of the sintered body of the glass beads. Accordingly, it is possible to preferably configure the porous structure.

### [Modification Examples]

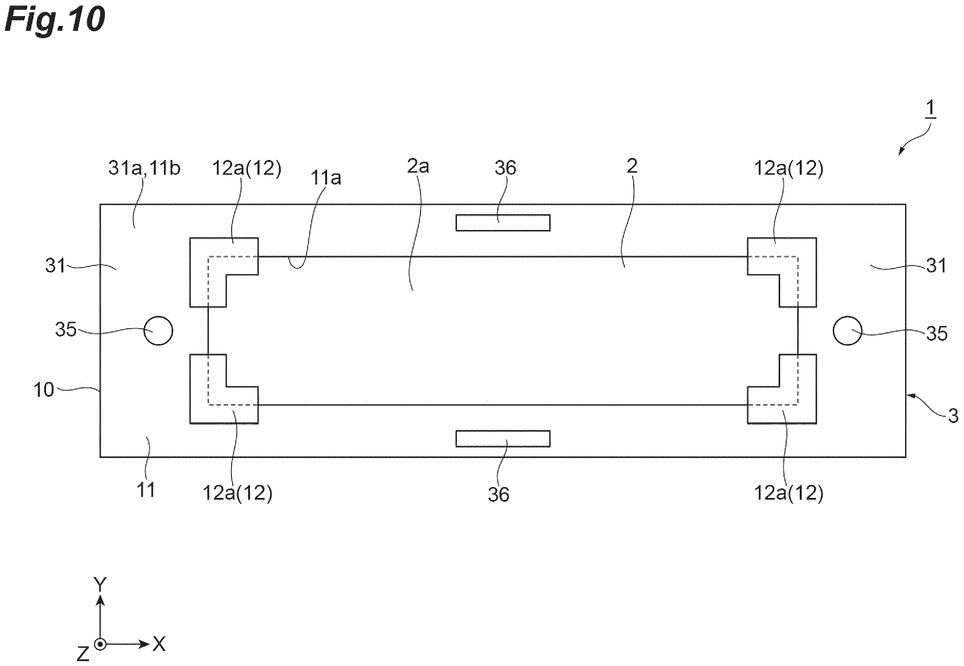

The sample support unit 1 may be configured as with a first modification example illustrated in FIG. 10. In the embodiment described above, the holding portion 12 is formed to hold the substrate 2 over the entire circumference, but in the first modification example, the holding portion 12 is formed to partially hold the substrate 2. The holding portion 12 of the first modification example has four (a plurality of) portions 12a formed in an approximately L shape when viewed in the Z direction. Four portions 12a are disposed in positions corresponding to four corners of the substrate 2, respectively. In this example, a part of the first surface 2a of the substrate 2 is exposed between four portions 12a.

In addition, in the first modification example, calibration regions 35 and 36 are formed in the frame 3. The calibration regions 35 and 36 are formed on the surface 11b of the main body portion 11. As described above, the surface 11b of the main body portion 11 is positioned on the same plane as that of the first surface 2a of the substrate 2. That is, the surfaces of the calibration regions 35 and 36 are positioned on the same plane of the first surface 2a. Two calibration regions 35 are provided, in which one calibration region 35 is disposed in one side portion of the frame 3 in the X direction, and the other calibration region 35 is disposed in the other side portion of the frame 3 in the X direction. Each of the calibration regions 35, for example, is formed in a circular shape. Two calibration regions 36 are provided, in which one calibration region 36 is disposed in one side portion of the frame 3 in the Y direction, and the other calibration region 36 is disposed in the other side portion of the frame 3 in the Y direction. Each of the calibration regions 36, for example, is formed in a rectangular shape having a long side parallel to the X direction.

The calibration region 35 is visually identifiable from a region adjacent to the calibration region 35 in the frame 3. That is, regions adjacent to the calibration region 35 and the calibration region 35 can be distinguishable with human eyes. A method for making the calibration region 35 identifiable may be any method, and for example, a groove may be formed around the calibration region 35 by half-etching, or a mark may be engraved by laser. Similarly, the calibration region 36 is visually identifiable from the region adjacent to the calibration region 36.

The calibration regions 35 and 36 are used for mass calibration. The mass calibration may be performed before the mass analysis measurement for the sample S is started. In the mass calibration, a sample for mass calibration (a calibration sample, a reference sample) is dropped onto the calibration regions 35 and 36, and the ionization and the mass analysis measurement described above are implemented on the calibration sample. Amass spectrum is corrected on the basis of a measurement result for the calibration sample. The mass spectrum is a spectrum obtained by the mass analysis, and for example, represented by a graph in which a horizontal axis is set as an m/z value, and a vertical axis is set as a detected strength. The m/z value is a mass-charge ratio obtained by dividing the mass m of the ions by the charge number z. Since the mass spectrum of the calibration sample is known, it is possible to perform the mass calibration of the mass analysis device, on the basis of the measurement result for the calibration sample.

According to such a first modification example, as with the embodiment described above, it is also possible to suppress the bending of the substrate 2 during fixation. In addition, the calibration regions 35 and 36 visually identifiable from the adjacent region are formed in the frame 3. In this case, for example, it is possible to widely ensure a region for measurement on the substrate 2, compared to a case where the calibration region is formed on the substrate 2. In addition, since the surface of the frame 3 in the calibration regions 35 and 36 is positioned on the same plane as that of the first surface 2a of the substrate 2, it is possible to accurately perform the mass calibration. Since the time-of-flight shift of the ions strongly depends on a depth direction of an occurrence position, but an influence due to a position in the same plane is small, it is important that the surface of the frame 3 in the calibration regions 35 and 36 is positioned on the same plane as that of the first surface 2a of the substrate 2.

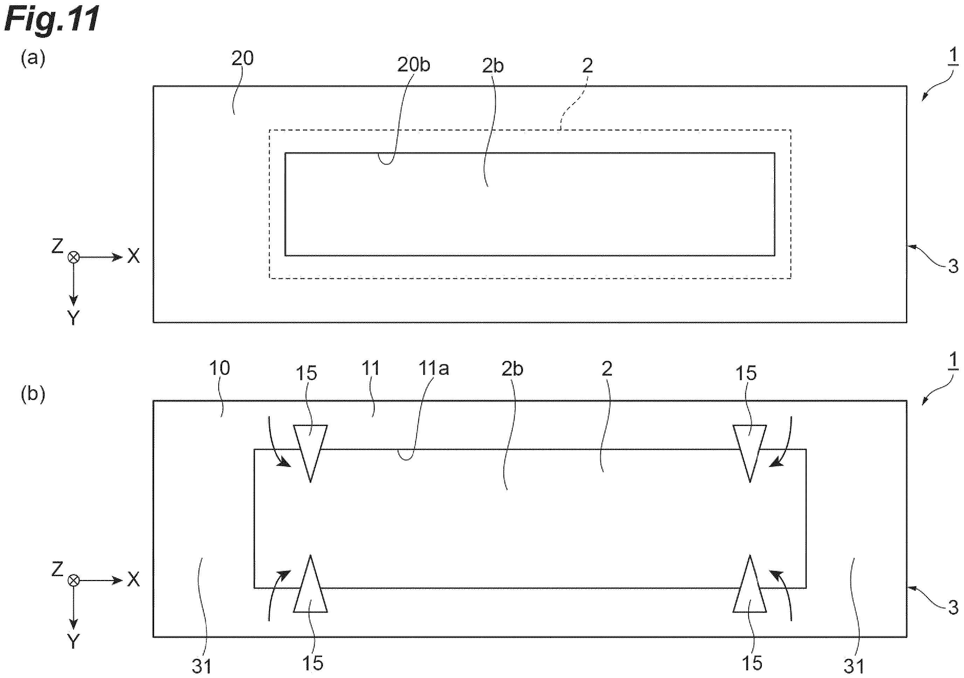

The sample support unit 1 may be configured as with a second modification example illustrated in FIG. 11(a). In the second modification example, the second member 20 is formed in a rectangular frame shape, and defines a rectangular opening 20a. The long side of the opening 20a extends along the long side of the substrate 2 (along the X direction). The opening 20a is formed in a rectangular shape slightly smaller than the substrate 2 when viewed in the Z direction. In a state where the frame 3 is attached to the substrate 2, a part (the center portion) of the second surface 2b is exposed from the opening 20a. According to such a second modification example, as with the embodiment described above, it is also possible to suppress the bending of the substrate 2 during fixation. In addition, since the second member 20 is formed in a frame shape, it is possible to visually check the state of the substrate 2 from the second surface 2b side.

The sample support unit 1 may be configured as with a third modification example illustrated in FIG. 11(b). In the third modification example, the frame 3 has only the first member 10 without having the second member 20. In this case, the fixing portion 31 is formed by the first member 10 only. The first member 10 is provided with four claw portions 15 engaged with the second surface 2b of the substrate 2. Two claw portions 15 are disposed in one long side portion of the first member 10, and the other two claw portions 15 are disposed in the other long side portion of the first member 10. Each of the claw portions 15 is rotatable around a fixing part with respect to the first member 10 as indicated by an arrow in FIG. 11(b). As illustrated in FIG. 11(b), in a state where the claw portion 15 protrudes from the first member 10, the claw portion 15 is engaged with the second surface 2b of the substrate 2 to prevent the separation of the substrate 2 from the frame 3. On the other hand, the substrate 2 can be attached to or detached from the frame 3, in a state where the claw portion is rotated to a position where the claw portion 15 does not protrude from the first member 10.

According to such a third modification example, as with the embodiment described above, it is also possible to suppress the bending of the substrate 2 during fixation. In addition, since the claw portion 15 is provided in the first member 10, it is possible to retain the substrate 2 by engaging the claw portion 15 with the second surface 2b. In addition, since the claw portion 15 is movable between a position where the claw portion is engaged with the second surface 2b and a position where the claw portion is not engaged with the second surface 2b, it is possible to easily engage the claw portion 15 with the second surface 2b.

The present disclosure is not limited to the embodiment and the modification examples described above. The materials and the shapes of each of the configurations are not limited to the materials and the shapes described above, and various materials and shapes can be adopted. For example, the porous structure of the substrate 2 may be formed of porous glass or a fiber porous body. The porous glass is a sponge-shaped glass plate in which a plurality of pores are irregularly formed and linked. The fiber porous body has a structure (an aggregate) in which a plurality of linear cellulose nanofibers overlap with each other. The fiber porous body, for example, may have a structure in which a plurality of carbon nanofibers, a plurality of fibrous porous silicas, a plurality of glass fibers, or combinations thereof overlap with each other.

The porous structure of the substrate 2 may be formed of anodically oxidized silicon or an anodically oxidized valve metal. In this case, the porous structure has a plurality of through holes formed to communicate the first surface 2a and the second surface 2b of the substrate 2 with each other. Such through holes, for example, are a plurality of pores extending along the thickness direction of the substrate 2, and in this case, the porous structure has a structure in which the plurality of pores are regularly disposed (a regular porous structure).

A case where the porous structure is formed of the anodically oxidized valve metal (for example, aluminum (Al)) will be further described. The porous structure, for example, may be an Al alumina porous film. Specifically, such a porous structure can be obtained by performing an anodization treatment with respect to an Al substrate, and peeling off the oxidized surface portion from the Al substrate. Note that, the porous structure may be formed by anodically oxidizing a valve metal other than Al, such as tantalum (Ta), niobium (Nb), titanium (Ti), hafnium (Hf), zirconium (Zr), zinc (Zn), tungsten (W), bismuth (Bi), and antimony (Sb).

The porous structure of the substrate 2 may be formed of porous ceramic or a porous metal. The structure of the porous ceramic is in a sponge shape in which a plurality of pores are irregularly formed and linked, as with the porous glass. The porous metal is a sponge-shaped metal perforated body (may be referred to as a metal porous body, a foam metal, a porous metal, a perforated metal, or the like) in which a plurality of pores are irregularly formed and linked.

The conductive layer may not be formed on the first surface 2a of the substrate 2, and the first surface 2a may have electrical insulating properties. In this case, for example, the sample S can be ionized by a desorption electrospray ionization method in which the sample S is desorbed and ionized by irradiating the sample S with electrically charged minute liquid droplets. In the embodiment described above, the porous structure formed in the substrate 2 is opened to the first surface 2a and the second surface 2b, but it is sufficient that the porous structure is capable of absorbing the components of the sample S supplied to the first surface 2a, and the porous structure may be opened only to the first surface 2a.

In the supplying step described above, the components of the sample S are supplied to the first surface 2a by placing the sample S on the first surface 2a of the substrate 2, but instead of this, the sample support unit 1 may be disposed on the sample S such that the second surface 2b is brought into contact with the sample S. In this case, the components of the sample S are moved toward the first surface 2a side from the second surface 2b side through a plurality of paths (the voids in the porous structure) formed in the substrate 2 by a capillary action. The components of the sample S moved to the first surface 2a side remain on the first surface 2a side by a surface tension. As described above, the components of the sample S may be supplied to the first surface 2a.

In the ionization method described above, the fixing step is implemented after the supplying step, but the supplying step may be implemented after the fixing step. That is, the components of the sample S may be supplied to the first surface 2a of the substrate 2 after fixing the sample support unit 1 with the holder 100 by attaching the frame 3 to the substrate 2. Here, in a case where the fixing step is implemented after the supplying step, as with the ionization method described above, it is preferable since the frame 3 does not interfere when placing the sample S on the first surface 2a.

In the embodiment described above, the frame 3 may have only the second member 20 without having the first member 10. In this case, the frame 3 may retain the substrate 2 such that the entire first surface 2a is exposed. That is, it is sufficient that the frame 3 retains the substrate 2 such that at least a part of the first surface 2a is exposed. In a case where the frame 3 has only the second member 20, the fixing portion 31 is formed by the second member 20 only. In the example illustrated in FIG. 5, in a state before the sample support unit 1 is fixed with the holder 100, the first member 10 and the second member 20 are not in contact with each other, but in a state before fixation, the first member 10 and the second member 20 may be in contact with each other.

### Reference Signs List

1: sample support unit, 2: substrate, 2a: first surface (effective surface of substrate 2), 2b: second surface, 3: frame, 10: first member, 15: claw portion, 20: second member, 31: fixing portion, 31a: surface, 35, 36: calibration region, 100: holder, 101a: surface (measurement surface), 102: clamping portion, S: sample.

## Claims

1. A sample support unit used for ionization of a sample, the unit comprising:
a substrate including a first surface, and a second surface on a side opposite to the first surface, and including a porous structure formed therein and opened to at least the first surface; and
a frame removably attached to the substrate and retaining the substrate such that at least a part of the first surface is exposed,
wherein the frame includes a fixing portion positioned outside the substrate when viewed in a direction perpendicular to the first surface, in a state of being attached to the substrate.

2. The sample support unit according to claim 1,
wherein the fixing portion includes a surface positioned on the same plane as that of the first surface.

3. The sample support unit according to claim 1 or 2,
wherein the frame includes a first member disposed on a side of the first surface, and a second member disposed on a side of the second surface.

4. The sample support unit according to claim 3,
wherein the fixing portion is formed by an overlapping portion of the first member and the second member.

5. The sample support unit according to claim 3 or 4,
wherein the first member is formed in a frame shape.

6. The sample support unit according to any one of claims 3 to 5,
wherein the second member is formed in a plate shape such that the frame covers an entirety of the second surface in a state of being attached to the substrate.

7. The sample support unit according to any one of claims 3 to 5,
wherein the second member is formed in a frame shape.

8. The sample support unit according to any one of claims 3 to 7,
wherein the first member and the second member are formed such that the substrate is interposed between the first member and the second member in a state in which the frame is attached to the substrate.

9. The sample support unit according to claim 1 or 2,
wherein the frame includes a first member disposed on a side of the first surface, and
the first member is provided with a claw portion engaged with the second surface.

10. The sample support unit according to any one of claims 1 to 9,
wherein the frame is formed with a calibration region used for mass calibration and the calibration region is visually identifiable from a region adjacent to the calibration region, and
a surface of the calibration region is positioned on the same plane as that of the first surface.

11. The sample support unit according to any one of claims 1 to 10,
wherein the porous structure is formed of a sintered body of glass beads, porous glass, a fiber porous body, anodically oxidized silicon, an anodically oxidized valve metal, porous ceramic, or a porous metal.

12. A sample ionization method using the sample support unit according to any one of claims 1 to 11, the method comprising:
a supplying step of supplying components of the sample to the first surface;
a fixing step of fixing the sample support unit by interposing the fixing portion of the frame between clamping portions of a holder; and
an ionizing step of ionizing the components of the sample on the first surface after the supplying step and the fixing step.

13. The sample ionization method according to claim 12,
wherein in the fixing step, the sample support unit is fixed such that a surface of the holder and the first surface are positioned on the same plane.
